# EUROPÄISCHE PATENTANMELDUNG

(11) **EP 0 919 129 A1**
(43) Veröffentlichungstag der Anmeldung: **02.06.1999**
(21) Anmeldenummer: 98102569.5
(22) Anmeldetag: 13.02.1998
(51) Int. Cl.: A21C 11/12, A21C 9/04, A21D 13/00

(54) **Brot-Snack mit periodisch strukturierter Oberseite sowie eine Vorrichtung zur Herstellung desselben**

(30) Priorität: 28.11.1997 DE 29721152 U
(71) Anmelder: Langnese Iglo GmbH, 22772 Hamburg (DE)
(72) Erfinder: Reimers, Bruno, 48734 Reken (DE); Mensing, Joseph, 48734 Reken (DE); Holtkamp, Wilhelm, 46244 Bottrop (DE)
(74) Vertreter: Held, Stephan, Dr.rer.nat., Dipl.-Chem.

(57) **Zusammenfassung**

Der erfindungsgemäße Brot-Snack weist einen Brotkörper (1) mit einer Oberseite (2) auf, die mit einer eßbaren Auflage (3) oder einer Auflagenmischung versehen ist, wobei die Oberseite mit einer Vertiefungen enthaltenden periodischen Struktur (4) ausgeprägt ist. Die eßbare Auflage oder Auflagenmischung befindet sich zumindest teilweise in den Vertiefungen der periodischen Struktur (4). Diese Struktur kann insbesondere sägezahnartig oder wellenförmig ausgebildet sein. Die Vorrichtung zur Herstellung des Brot-Snacks weist eine Fräseinrichtung (6) auf, deren Messer (7,11) entsprechend der gewünschten Querschnittsform der in den Brotkörper einzuformenden Vertiefungen ausgebildet sind.

## Beschreibung

Die Erfindung betrifft Brot-Snacks, deren Oberseite mit einer eßbaren Auflage versehen ist, sowie eine Vorrichtung zur Herstellung derselben. Brot-Snacks mit einer eßbaren Auflage sind im Stand der Technik bekannt und werden z.B. von der Firma Langnese-Iglo GmbH hergestellt. Diese bekannten Produkte weisen eine horizontale, plane Oberseite auf, welche durch horizontales Zerteilen eines im wesentlichen quaderförmigen Brotproduktes entsteht. Auf diese plane Schnittfläche, die die Oberseite des Brot-Snacks bildet, wird eine eßbare Auflage bzw. eine Auflagernmischung aufgebracht, die beispielsweise Käse, Wurst, Hackfleisch, Pilze oder Obst, z.B. Ananasstücke, enthalten kann. Üblicherweise kommen die Brot-Snacks in gefrorenem Zustand in den Handel und werden erst durch den Endverbraucher zum Verzehr im Backofen erhitzt.

Diese bekannten Brot-Snacks weisen jedoch den Nachteil auf, daß sie sich nur schlecht portionieren lassen. Insbesondere ein sauberes Zerteilen in mundgerechte Portionen ohne Zuhilfenahme eines Messers erweist sich als äußerst schwierig, was vom Verbraucher gerade deshalb als nachteilig empfinden wird, da die Brot-Snacks auch für den Verzehr von Hand, d.h. ohne Besteck, gedacht sind. Des weiteren läßt sich bei der Endzubereitung im Backofen durch den Verbraucher kaum eine krosse Oberfläche erreichen. Aufgrund der im wesentlichen quaderförmigen Gestalt des Produktes ist die Konsistenz desselben auf der gesamten Brotoberfläche gleich. Eine Bräunung ist im allgemeinen nur am Rand des Produktes zu erkennen. Zwar ließe sich eine krosse Oberfläche durch eine Verlängerung der Backzeit erreichen, jedoch kann dies zum Verbrennen des Brotrandes führen, was die Genießbarkeit des Brot-Snacks beeinträchtigt.

Im Stand der Technik sind weiterhin Brotprodukte in Form von Baguettes mit quer zur Längsrichtung des Baguettes verlaufenden Einschnitten in Form schmaler Spalte bekannt, die mit einer Creme oder Kräuterbutter gefüllt sind. Bei diesen Produkten befindet sich demnach die Creme oder Kräuterbutter innerhalb des Brotkörpers und ist deshalb für den Verbraucher vor dem Zerteilen des Brotproduktes nicht sichtbar. Der Verbraucher kann also weder erkennen, welche Art von Füllung in das Produkt injiziert wurde, noch den Zustand, in dem sich die Füllung befindet. So ist es beispielsweise während der Endzubereitung im Backofen unmöglich zu beurteilen, ob die in den Einschnitten befindliche Kräuterbutter bereits geschmolzen ist. Da die Zubereitungszeiten je nach Qualität des Ofens und der Ausgangstemperatur des Brotproduktes auch bei ansonsten identischen Produkten stark schwanken können, fehlt hierdurch dem Verbraucher ein Anhaltspunkt für die Wahl der richtigen Zubereitungszeit. Derartige Brotprodukte werden beispielsweise von der Firma Sinnack hergestellt. Aufgrund der im Querschnitt im wesentlichen halbkugeligen Oberfläche dieser Produkte ist das Aufbringen einer Auflage oder Auflagenmischung kaum möglich.

Ausgehend vom vorstehend geschilderten Stand der Technik liegt der Erfindung die Aufgabe zugrunde, einen Brot-Snack mit einer Oberseite, die mit einer eßbaren und für den Verbraucher auch vor dem Zerteilen sichtbaren Auflage bzw. einer Auflagenmischung versehen ist, bereitzustellen, der sich auf einfache Weise in mundgerechte Portionen zerteilen läßt und bei dem durch die Endzubereitung im Backofen eine krosse Oberfläche erhalten werden kann. Des weiteren ist es eine Aufgabe der vorliegenden Erfindung, eine Vorrichtung zur Herstellung eines derartigen Brot-Snacks bereitzustellen.

Diese Aufgabe wird erfindungsgemäß dadurch gelöst, daß die Oberseite eine Vertiefungen enthaltende periodische Struktur aufweist, wobei die eßbare Auflage zumindest teilweise in den periodischen Vertiefungen enthalten ist. Somit ist beim erfindungsgemäßen Brot-Snack eine Folge von Vertiefungen in die im wesentlichen horizontale Oberseite eingeformt. Die periodische Struktur kann beispielsweise sägezahnartig oder wellenförmig ausgebildet sein. Die Vertiefungen oder Kerben können auch eine im wesentlichen rechteckige Grundfläche aufweisen. Durch die eingeformten Vertiefungen wird eine Kerbwirkung erzeugt, so daß das Abbrechen von einzelnen Brotstücken an diesen Stellen erheblich vereinfacht wird. Die Vertiefungen bilden demzufolge Sollbruchstellen, an denen der Brot-Snack auch ohne Zuhilfenahme eines Messers auf saubere Weise zerteilt werden kann. Vorzugsweise sind die einzelnen Vertiefungen so voneinander beabstandet, daß mundgerechte Portionen abgebrochen werden können. Hierdurch wird der Verzehr des Brot-Snacks stark vereinfacht.

Je nach Auflage oder Auflagenmischung kann sich diese ausschließlich in den Vertiefungen oder Kerben befinden oder auch, zumindest teilweise, die Erhebungen der Oberseite bedecken.

Bei der Endzubereitung der Brot-Snacks im Backofen der Konsumenten werden die Erhebungen der periodischen Struktur, beispielsweise die Spitzen der Sägezähne oder Wellenzüge, deutlich krosser als die Vertiefungen oder Kerben. Wenn die Auflage oder Auflagemischung eine Creme, beispielsweise eine Kräutercreme, enthält, sammelt sich diese Creme bei der Zubereitung in den Vertiefungen oder Kerben der periodischen Struktur an, wodurch der vorstehend beschriebene Effekt noch verstärkt wird. Gerade diese Kombination aus teilweise krosser Oberfläche und cremiger Auflage wird vom Konsumenten als wohlschmeckend empfunden. Ein knuspriger und zugleich saftiger Brot-Snack kann beispielsweise dadurch erhalten werden, daß auf die strukturierte Oberseite eine Auflage aufgebracht wird, die beispielsweise Käse, Wurst und/oder Fleischprodukte, Kräutercreme, Gemüse und/oder Obst, insbesondere Ananasstücke, enthält. Es können selbstverständlich auch Mischungen aufgebracht werden.

Die strukturierte Oberseite des erfindungsgemäßen Brot-Snacks kann sich sowohl im wesentlichen horizontal erstrecken als auch mit einer Wölbung nach oben ausgebildet sein. Die erste Variante dürfte sich insbesondere dann anbieten, wenn größere Teile, beispielsweise Gemüse- oder Obststücke, enthaltende Auflagenmischungen verwendet werden. Diese können dann auch außerhalb der Kerben auf den Erhebungen bzw. Spitzen der Oberflächenstruktur aufliegen, ohne daß ein Herabfallen der Teile befürchtet werden muß. Die zweite Variante mit gewölbter bzw. gekrümmter Oberfläche eignet sich insbesondere für Auflagen in Form einer Creme oder in Form von Kräuterbutter, die sich dann vollständig innerhalb der Vertiefungen oder Kerben befindet.

In einer bevorzugten Ausführungsform ist der Brotkörper des Brot-Snacks im wesentlichen quaderförmig ausgebildet, wobei die Oberseite des Quaders mit einer periodischen Struktur versehen ist. Die Abmessungen des Quaders können beispielsweise wie folgt sein: Länge etwa 16 bis 18 cm, insbesondere etwa 17 cm, Breite etwa 5 bis 7,5 cm, insbesondere etwa 6 cm, Dicke etwa 1,5 bis 2,5 cm, insbesondere etwa 2 cm. Diese Abmessungen entsprechen der Größe der Standardbaguetteprodukte, die derzeit von der Firma Langnese-Iglo GmbH produziert werden. Erfindungsgemäße Brot-Snacks können jedoch auch in anderen Größen und Formen hergestellt sein. So sind insbesondere auch großformatigere Produkte denkbar, die sich entlang den Vertiefungen oder Kerben in Portionen unterteilen lassen. Es können jedoch auch erfindungsgemäße Brot-Snacks mit kleineren Abmessungen produziert werden.

Die Tiefe der Kerben kann in gewissem Umfang beliebig ausgewählt werden. Hierbei ist jedoch zu bedenken, daß die Stabilität des Brot-Snacks gewährleistet sein sollte. Reichen die Kerben oder Vertiefungen zu weit in das Innere des Brot-Snacks, so besteht die Gefahr, daß das Produkt beispielsweise schon bei der Entnahme aus dem Backofen zerbricht. Es hat sich deshalb als vorteilhaft erwiesen, wenn die Tiefe der Kerben oder Vertiefungen nicht mehr als etwa die Hälfte der Dicke des Brot-Snacks, gemessen von der Grundfläche bis zu den Spitzen der Erhebungen, beträgt.

Besonders geeignet ist eine Tiefe der Kerben oder Vertiefungen von etwa 0,5 bis 1,25 cm, insbesondere etwa 1 cm, bei einer Breite von etwa 2 cm.

In einer bevorzugten Ausführungsform verläuft die periodische Struktur, d.h. die Vertiefungen oder Kerben, im wesentlichen parallel zur kürzeren Seite der rechteckigen Grundfläche des Brotkörpers. Sie kann jedoch auch parallel zur längeren Seite der Grundfläche des Körpers ausgebildet sein oder einen beliebigen anderen Winkel mit den Seiten einschließen. Des weiteren ist eine Kombination aus Vertiefungen oder Kerben denkbar, die einander schneiden, so daß auf der Oberseite eine karo- oder rautenförmige Struktur entsteht.

Eine weitere Möglichkeit besteht darin, erfindungsgemäße Brot-Snacks mit kreisförmiger Oberseite herzustellen. Die Vertiefungen können dann beispielsweise radial vom Mittelpunkt der kreisförmigen Oberfläche aus nach außen verlaufen, so daß Teile in Form von "Tortenstücken" aus dem Brotprodukt herausgebrochen werden können.

Der Abstand der periodischen Vertiefungen voneinander, bzw. die Anzahl der auf einer Fläche vorgegebener Größe ausgeprägten Vertiefungen und Erhebungen, kann entsprechend den Anforderungen beliebig sein. Beispielsweise führt eine große Anzahl an Vertiefungen dazu, daß die zwischenliegenden Spitzen oder Erhebungen der periodischen Struktur beim Backen eine besonders krosse Oberfläche erhalten. Andererseits sollte die periodische Struktur auch auf die gewünschte Auflage oder Auflagenmischung abgestimmt werden. So kann es beispielsweise, wenn die Auflagenmischung größere Wurst- oder Gemüsestücke enthält, von Vorteil sein, die Vertiefungen oder Kerben breiter auszubilden, so daß sie diese Stücke vollständig aufnehmen können. Beispielsweise kann bei einem Brot-Snack, der die vorstehend genannten Standardabmessungen aufweist, eine Struktur mit etwa 5 bis 12 parallel zur schmäleren Seite der Grundfläche verlaufenden Vertiefungen ausgebildet sein.

Des weiteren wird die vorstehend genannte Aufgabe durch eine Vorrichtung zur Herstellung eines Brot-Snacks gelöst, welche eine Fräseinrichtung aufweist, deren Messer entsprechend der gewünschten Querschnittsform der Vertiefungen im Brotkörper ausgebildet sind. Durch die beschriebene Vorrichtung ist es möglich, Vertiefungen oder Kerben mit einer nicht verschwindenden Breite in den Brotkörper einzuformen. Durch eine entsprechende Auswahl der Messer der Fräseinrichtung können beliebige Formen von Vertiefungen ausgebildet werden.

In einer bevorzugten Ausführungsform weist die Fräseinrichtung mehrere, nebeneinander auf einer gemeinsamen Welle montierte Scheibenfräser auf Beim Betrieb der Vorrichtung werden die Brotkörper und die Welle der Fräseinrichtung relativ zueinander bewegt, und die Messer rotieren um die gemeinsame Welle, so daß die gewünschte Einkerbung entlang der Brotoberfläche erzeugt wird. Je nach Größe des Brotkörpers und nach der gewünschten Anzahl der einzubringenden Vertiefungen kann eine entsprechende Anzahl an Scheibenfräsern ausgewählt werden. Darüber hinaus ist es auch möglich, die einzelnen Scheibenfräser auszutauschen, wenn zu einer anderen Kerbenform übergegangen werden soll.

Die erfindungsgemäße Vorrichtung kann des weiteren eine Zuführeinrichtung zum Transportieren der Brotprodukte zur Fräseinrichtung aufweisen. Dies hat den Vorteil, daß die Fräseinrichtung selbst ortsfest sein kann. Die Zuführeinrichtung kann so ausgelegt sein, daß sie die Brotkörper nach dem Einfräsen der Kerben oder Vertiefungen weiter bis zu einem Ort transportiert, an dem das Aufbringen der eßbaren Auflage, automatisch oder von Hand, erfolgt.

Die Zuführeinrichtung kann Gefache, die auf einem Transportgurt oder einer Transportkette montiert sind, sowie Niederhalter zum Fixieren der Brotkörper im jeweiligen Gefach aufweisen. Hierdurch wird sichergestellt, daß die Brotkörper auch während des Fräsvorgangs ihre vorgegebene Anordnung beibehalten, so daß beim Fräsvorgang sauber begrenzte Einkerbungen entstehen, die entlang einer geraden Linie verlaufen. Wird das Gefach in einem beliebigen Anstellwinkel α zur Transportrichtung angeordnet, so verlaufen die erzeugten Kerben entsprechend winklig zur Längsachse des Brotkörpers. Als besonders vorteilhaft im Hinblick auf die praktische Ausgestaltung hat sich ein Anstellwinkel α von 45° bis 90° erwiesen. Für besondere Brotprodukte kann jedoch auch ein Einstellwinkel α von 0° gewählt werden, d.h., daß im Brotkörper Kerben entsprechend der Längsachse desselben eingefräst werden.

Der Scheibenfräser kann außerdem mit einer Kerbnase versehen sein, so daß während des Fräsvorgangs eine zusätzliche Kerbe innerhalb der Hauptkerbe entsteht, wodurch die Portionierbarkeit des Produktes begünstigt wird. Vorzugsweise beträgt die Dicke der Kerbnase nicht mehr als etwa ¼ der Dicke der Fräserscheibe.

Die Erfindung wird nachfolgend in bezug auf die in der Zeichnung dargestellten Ausführungsbeispiele näher erläutert. In der Zeichnung zeigen:
- Fig. 1 einen Brot-Snack gemäß dem Stand der Technik,
- Fig. 2 ein anderes Brotprodukt gemäß dem Stand der Technik,
- Fig. 3 einen erfindungsgemäßen Brot-Snack mit sägezahnartiger Oberflächenstruktur,
- Fig. 4 eine andere Ausführungsform eines erfindungsgemäßen Brot-Snacks mit wellenförmiger Oberflächenstruktur,
- Fig. 5 eine weitere Ausführungsform eines erfindungsgemäßen Brot-Snacks mit nach oben gewölbter Oberfläche im Querschnitt,
- Fig. 6 einen Querschnitt durch einen erfindungsgemäßen Scheibenfräser zur Ausbildung der Vertiefungen im Brotkörper,
- Fig. 7 eine erfindungsgemaße Fräseinrichtung im Längsschnitt,
- Fig. 8 eine erfindungsgemäße Vorrichtung zur Herstellung eines Brot-Snacks in Draufsicht.

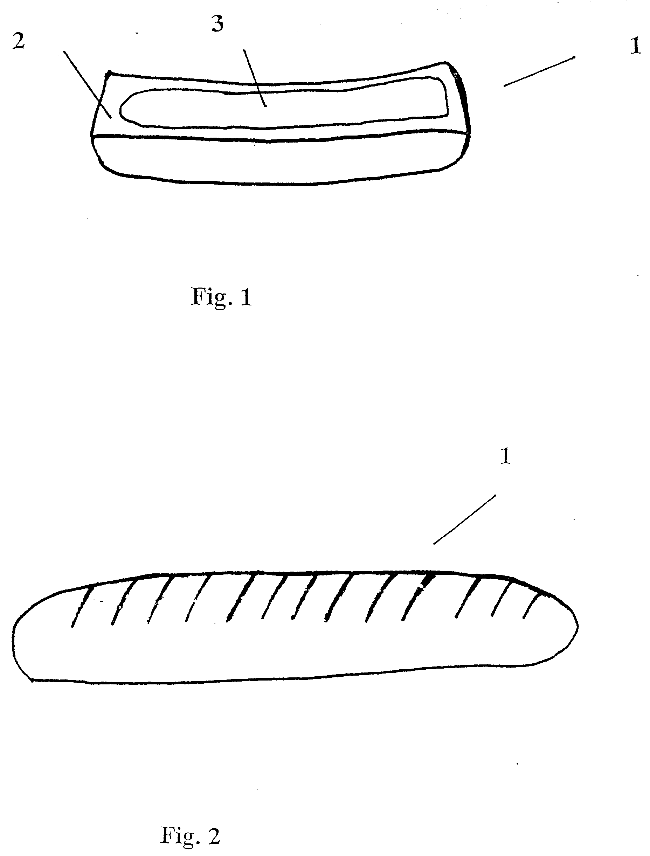

Der gemäß dem stand der Technik ausgebildete Brot-Snack von Fig. 1 weist einen Brotkörper 1 mit einer im wesentlichen horizontalen Oberseite 2 auf. Die plane Oberseite ist mit einer Auflage 3, beispielsweise einer Kräuter- oder Gemüsecreme, bedeckt. Beim Backen dieses Produktes erhält nur der äußere Rand eine knusprige bzw. krosse Konsistenz. Die Zerkleinerung des fertigen Produktes erweist sich aufgrund dessen gleichmäßiger Dicke als schwierig, insbesondere wenn kein Messer zur Verfügung steht.

In Fig. 2 ist ein weiteres Produkt des Standes der Technik dargestellt. Der Brotkörper 1 weist eine langgezogene Form mit abgerundeter Oberfläche auf. Für das Einbringen von Füllungen sind quer zur Längsrichtung des Produktes verlaufende Einschnitte vorgesehen. Diese Brotkörperform ist für die Herstellung von Brot-Snacks insofern nachteilig, als die im Brot enthaltene Füllung, anders als beim in Fig. 1 dargestelltem Produkt, für den Konsumenten erst beim Zerteilen sichtbar wird. Auch ist die Füllung im Brotkörper sehr ungleichmäßig verteilt.

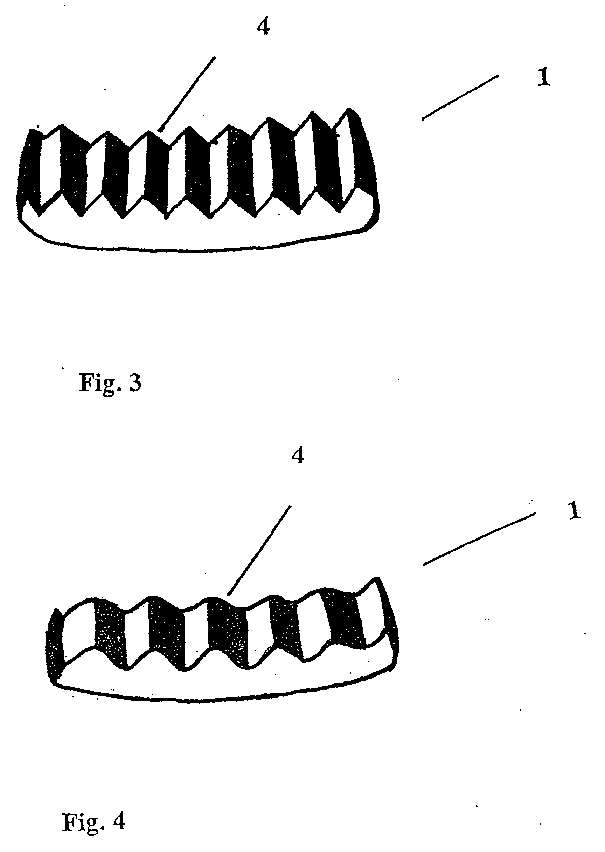

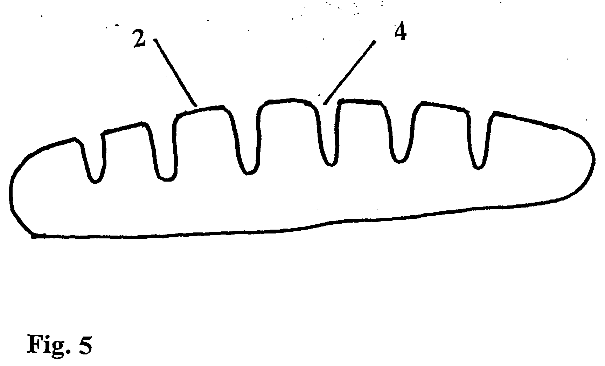

In den Fig. 3 und 4 ist jeweils ein im wesentlichen quaderförmiger Brotkörper 1, mit einer erfindungsgemäßen periodischen Struktur 4 dargestellt. Im Fall von Fig. 3 handelt es sich hierbei um eine Sägezahnstruktur mit 8 parallel zur kürzeren Seite der Grundfläche des Brotkörpers verlaufenden Kerben. Im Ausführungsbeispiel von Fig. 4 wird eine sinusförmige Oberflächenstruktur 4 der horizontalen Oberseite 2 gezeigt, die aus 5 aufeinanderfolgenden Wellenzügen besteht.

Fig. 5 zeigt eine weitere Ausführungsform eines erfindungsgemäßen Brot-Snacks mit einer nach oben gewölbten Oberseite 2 im Querschnitt. Die Vertiefungen der periodischen Struktur 4 weisen einen im wesentlichen U-förmigen Querschnitt auf. Diese Vertiefungen eignen sich besonders gut für eine tief in den Brotkörper einzubringende Creme oder eine Kräuterbutter, die dennoch von oben für den Konsumenten deutlich erkennbar ist.

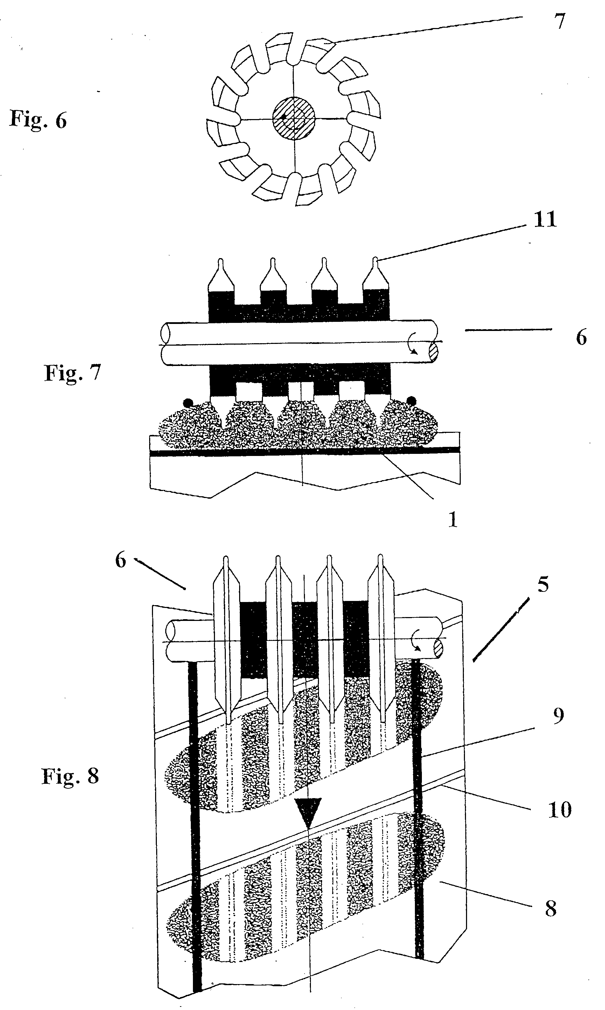

In Fig. 6 ist ein Scheibenfräser 7 im Querschnitt dargestellt, der Teil einer Fräseinrichtung 6 zum Ausbilden der Kerben oder Vertiefungen im Brotkörper ist. Bei der Herstellung des Brot-Snacks wird der Scheibenfräser in die durch den Pfeil dargestellte Richtung gedreht.

In der Praxis sind mehrere derartige Scheibenfräser 7 in der in Fig. 7 dargestellen Weise nebeneinander angeordnet, so daß sie eine gemeinsame Drehachse aufweisen. Wie in dieser Figur deutlich zu erkennen ist, haben die Messer der einzelnen Fräserscheiben eine im wesentlichen V-förmige Kontur, wobei an der Spitze des V jeweils eine zusätzliche Ausbuchtung in Form einer Kerbnase 11 ausgebildet ist. Durch diese Ausführungsform entsteht während des Fräsvorgangs eine zusätzliche Kerbe zentrisch innerhalb der Hauptkerbe. Hierdurch wird eine besonders leichte Portionierbarkeit des Brotproduktes erreicht.

In Fig. 8 ist eine erfindungsgemäße Vorrichtung zur Herstellung eines Brot-Snacks mit der Fräseinrichtung von Fig. 7 in Draufsicht dargestellt. Die Brotkörper 1 sind jeweils einzeln in Gefachen 8 so angeordnet, daß ihre Längskanten in etwa parallel zu den Anschlägen 10 der Gefache verlaufen. Die Anschläge 10 der Gefache 8 schließen mit der durch den dicken Pfeil kenntlich gemachten Transportrichtung der Zuführeinrichtung 5 einen Winkel von 70° ein. Die Brotkörper 1 sind in den Gefachen 8 mittels Niederhalter 9, die vorzugsweise aus einem elastischen Band bestehen, in ihrer Position fixiert. Somit wird eine Verschiebung des Brotkörpers innerhalb des Gefaches während des Fräsvorgangs vermieden, und es entsteht eine glatte Kerbe im Brotprodukt.

## Patentansprüche

1. Brot-Snack, aufweisend einen Brotkörper (1) mit einer Oberseite (2), die mit einer eßbaren Auflage (3) versehen ist, dadurch gekennzeichnet, daß die Oberseite eine Vertiefungen enthaltende periodische Struktur (4) aufweist, wobei die eßbare Auflage (3) zumindest teilweise in den periodischen Vertiefungen enthalten ist.

2. Brot-Snack nach Anspruch 1, wobei die Oberseite (2) sägezahnartig ausgebildet ist.

3. Brot-Snack nach Anspruch 1, wobei die Oberseite (2) wellenförmig ausgebildet ist.

4. Brot-Snack nach Anspruch 1, wobei die Oberseite (2) mit Vertiefungen ausgebildet ist, die einen im wesentlichen V- oder U-förmigen Querschnitt aufweisen.

5. Brot-Snack nach einem der vorstehenden Ansprüche, wobei der Brotkörper im wesentlichen quaderförmig ausgebildet ist.

6. Brot-Snack nach Anspruch 5, wobei die periodische Struktur im wesentlichen parallel zur kürzeren Seite der Grundfläche des Brotkörpers verläuft.

7. Brot-Snack nach mindestens einem der vorstehenden Ansprüche, wobei die Oberseite (2) des Brotkörpers (1) gekrümmt ist.

8. Brot-Snack nach den Ansprüchen 1 bis 6, wobei die Oberseite (2) des Brotkörpers (1) im wesentlichen horizontal verläuft.

9. Brot-Snack nach mindestens einem der vorstehenden Ansprüche, wobei die eßbare Auflage Käse enthält.

10. Brot-Snack nach mindestens einem der vorstehenden Ansprüche, wobei die eßbare Auflage Wurst und/oder ein Fleischprodukt enthält.

11. Brot-Snack nach mindestens einem der vorstehenden Ansprüche, wobei die eßbare Auflage eine Kräutercreme enthält.

12. Brot-Snack nach mindestens einem der vorstehenden Ansprüche, wobei die eßbare Auflage Gemüse und/oder Obst enthält.

13. Vorrichtung zur Herstellung eines Brot-Snacks nach mindestens einem der vorstehenden Ansprüche 1 bis 12, dadurch gekennzeichnet, daß sie eine Fräseinrichtung (6), deren Messer entsprechend der gewünschten Querschnittsform der Vertiefungen im Brotkörper (1) ausgebildet sind, aufweist.

14. Vorrichtung nach Anspruch 13, dadurch gekennzeichnet, daß die Fräseinrichtung mehrere, nebeneinander auf einer gemeinsamen Welle montierte Scheibenfräser (7) aufweist.

15. Vorrichtung nach Anspruch 13 oder 14, dadurch gekennzeichnet, daß sie außerdem eine Zuführeinrichtung (5) zum Transportieren der Brotkörper (1) zur Fräseinrichtung (6) aufweist.

16. Vorrichtung nach Anspruch 15, dadurch gekennzeichnet, daß die Zuführeinrichtung Gefache (8), die auf einem Transportgurt oder einer Transportkette montiert sind, sowie Niederhalter (9) zum Fixieren der Brotkörper im jeweiligen Gefach aufweist.

17. Vorrichtung nach Anspruch 16, dadurch gekennzeichnet, daß der Anstellwinkel α zwischen den Anschlägen (10) der Gefache und der Transportrichtung zwischen 45° und 90° beträgt.

18. Vorrichtung nach einem der Ansprüche 13 bis 17, dadurch gekennzeichnet, daß die Messer der Fräseinrichtung (6) eine Kerbnase (11) zum Ausbilden einer zusätzlichen Kerbe aufweisen.
